# EUROPÄISCHE PATENTANMELDUNG

(11) **EP 3 037 397 A1**
(43) Veröffentlichungstag der Anmeldung: **29.06.2016**
(21) Anmeldenummer: 15003598.8
(22) Anmeldetag: 17.12.2015
(51) Int. Cl.: C05F 3/00, A01G 1/00

(54) **VERFAHREN ZUR HERSTELLUNG VON PFLANZ-, ODER BLUMENERDEN, ODER SPEZIALERDEN, SOWIE DIESBEZÜGLICHE ERDEN SELBST**

(30) Priorität: 22.12.2014 DE 102014019350
(71) Anmelder: Rogmans, Maria, 47546 Kalkar (DE); AgriV Raiffeisen e.G., 47546 Kalkar (DE)
(72) Erfinder: Wilms, Uwe, 41379 Brüggen (DE); Wilhelm, Hermann-Josef, 47546 Kalkar (DE)
(74) Vertreter: Schmidt, Karl Michael

(57) **Zusammenfassung**

Die Erfindung betrifft ein Verfahren zur Herstellung von Pflanz-, oder Blumen-, oder Kompost-, oder Spezialerden, oderr Kultursubstrat, bei welcher zumindest Teile von landwirtschaftlicher Gülle oder Gärresten zu einem Basiserdsubstrat mit zugemischt wird, gemäß Oberbegriff der Patentansprüche 1 und 12. Um hierbei die genannten Stoffe in einen ökologisch nützlichen Prozess einzubinden, und eine nahezu ganzjährige Verarbeitung zu ermöglichen, ist erfindungsgemäß vorgeschlagen, dass als Basiserdsubstrat Tertiärerde oder Abraumerde aus dem Bergbau verwendet wird, und dass landwirtschaftliche Gülle oder Gärreste in einer mechanischen Separation in Dickphase und Dünnphase getrennt, und die so abseparierte Dickphase der Gülle oder der Gärreste sodann der besagten Tertiär oder Abraumerde zugemischt wird.

## Beschreibung

Die Erfindung betrifft ein Verfahren zur Herstellung von Pflanz-, oder Blumen-, oder Spezialerden, gemäß Oberbegriff des Patentanspruches 1, sowie diesbezügliche Erden selbst, gemäß Oberbegriff des Patentanspruches 12.

Aus der EP 0 405 571 A1 ist es bekannt, Gülle durch Einbringung in Wasser zu einem definierbaren und einstellbaren Nährwasser zur Kultivierung von Nutzpflanzen zu gestalten.

Für die Ausbringung einer solchen verdünnten Gülle gelten aber gesetzliche Zeiten d.h. Ausbringungs- und Sperrzeiten.

Gülle und Gärreste fallen in landwirtschaftlichen Betrieben, oder Lebensmittelproduktionsstätten an.

Der Erfindung liegt daher die Aufgabe zugrunde, die genannten Stoffe in einen ökologisch nützlichen Prozess einzubinden, und eine nahezu ganzjährige Verarbeitung zu ermöglichen.

Die gestellte Aufgabe ist bei einem Verfahren der gattunsgemäßen Art erfindungsgemäß durch die kennzeichnenden Merkmale des Patentanspruches 1 gelöst.

Weitere vorteilhafte Ausgestaltungen des Herstellverfahrens sind in den abhängigen Ansprüchen 2 bis 11 angegeben.

In Bezug auf die Erde selbst ist die gestellte Aufgabe erfindungsgemäß durch die Merkmale des Patentanspruches 12 gelöst.

Kern der Erfindung in Bezug auf ein Verfahren zur Herstellung von Pflanz-, oder Blumen-, oder Spezialerden ist, dass als Basiserdsubstrat Tertiärerde oder Abraumerde aus dem Bergbau, oder Erden die bei der Beerntung von Feldfrüchten anfallen, oder Bleicherden, oder Baggererden aus Flüssen, oder Flugsand verwendet wird, und dass landwirtschaftliche Gülle oder Gärreste in einer mechanischen Separation in Dickphase und Dünnphase getrennt, und die so abseparierte Dickphase der Gülle oder der Gärreste sodann der besagten Tertiär- oder Abraumerde zugemischt wird.

Dadurch wird eine freie Ausbringung der Gülle vermieden und ein sinnvolles Produkt, bspw zur Rekultivierung von Brachland zu Ackerland, oder einfach der Versorgung von Gärtnerbetrieben mit Spezialerden geschaffen. Darüber hinaus ergibt sich aus dem erfindungsgemäßen Verfahren und dem daraus resultierenden Produkt, dass eine an sich Problemerde, nämlich eine Tertiär- oder Abraumerde als Basiserde für die Erdmischung herangezogen wird, die in ihrer Bodenanalyse relativ viel Eisen enthält. Eisen, so hat sich herausgestellt, ist aber kein durchweg schädlicher, sondern tendenziell positiv wirkender Stoff. Man denke dabei nur an die eisenreichen Böden in den fruchtbaren äquatorialen Zonen, in denen sogar Ölpflanzen, Zuckerrohr und dergleichen kultiviert werden.

Ansonsten sind diese Basiserden also zur Herstellung von Kulturerden bzw Kultursubstraten aber im höchsten Maße wertvoll.

Nicht nur die unbehandelte Tertiär- oder Abraumerde stellt ein Problem dar, sondern anderseits auch die großen Mengen an landwirtschaftlicher Gülle stellen jeweils für sich zunächst einen Problemstoff dar.

Mit der Erfindung ist es nunmehr gelungen, aus zwei an sich als Problemstoff gehandhabten Rohstoffen durch Vermischung der selben, nunmehr einen absolut förderlichen Rohstoff in Summe zu erhalten. So sind nicht nur zwei Probleme beseitigt, sondern aus zwei Problemen wird am Ende durch die Problemlösung beider Probleme ein vorteilhaftes Produkt geschaffen. Folgende Vorteile entstehen in Summe:
- Entlastung des euthrophierten Grundwassers.
- Entlastung des Grundwassers durch Eisenocker auf Abraumdeponien und Flüssen.

Die so erfindungsgemäß erhaltenen Erden werden somit dann in sandigen Böden eingesetzt, die dadurch fruchtbar werden.

In einer vorteilhaften Ausgestaltung wird eine absolute Reproduzierbarkeit der Erden dadurch erreicht, dass das Mischungsverhältnis von Basiserdsubstrat und abseparierter Dickphase der Gülle oder der Gärreste vom ph-wert abhängig gesteuert eingestellt wird, indem ausgehend von dem Basiserdsubstrat abseparierte Dickphase von Gülle oder von Gärresten zugeführt wird, bis ein ph-Wert der Mischung von PH 5,5 bis PH 7,0 erreicht wird.

In der Regel sind die Basiserdsubstrate wie Tertiärerde oder Abraumerde aus dem Bergbau sehr sauer. D.h. sie liegen bei einem PH-Wert von 3 bis 5.

Erst die Zumischung der besagten Dickphase der abseparierten Gülle oder Gärreste wird den ph-Wert an. Der im Endzustand der Mischung erzielte PH-Wert beeinflusst die Qualität der so erhaltenen Kulturerde maßgeblich.

Dieser ist auch noch abhängig vom Verwendungszweck der Erden. So bevorzugt die Gruppe der Moorbeetpflanzen tendenziell eine eher sauerere Erde.

Als guter Ausgangspunkt für ein Mischungsverhältnis bei der Verwendung von Tertiärerde hat sich eine 50% zu 50% Mischung, d.h. Gewichtsprozent, aus Tertiärerde und abseparierter Dickphase aus Gülle oder Gärresten ergeben.

Grundsätzlich ist aber, wie nachfolgend beschrieben, nach dem PH-Wert zu mischen.

In das Gesamtkonzept des Basiserdsubstrates passen somit auch Deckerde von Kiesbaggerungen, Aber auch Erdsammlungen aus Haushalten.

In weiterer vorteilhafter Ausgestaltung ist angegeben, dass das Mischungsverhältnis von Basiserdsubstrat und abseparierter Dickphase der Gülle oder Gärreste über den PH-Wert gesteuert eingestellt wird, indem ausgehend von dem Basiserdsubstrat abseparierte Dickphase von Gülle oder Gärresten zugeführt wird, bis ein PH-Wert der Mischung von PH 3,5 bis PH 5,5 erreicht wird.

Eine Basiserde, wie die Tertiär- oder Abraumerde weist einen PH Wert von 2,5 bis 4,5 auf.

Durch die Zugabe der Dickphase aus der Separation von landwirtschaftlicher Gülle oder Gärresten, wird nun der PH wert angehoben. Die Mischung muss dabei PH-Wert überwacht werden. Das beste Mischungsverhältnis ergibt sich also nicht aus einer vorherigen Zahlenangabe, sondern aus dem im Mischungsziel angestrebten resultierenden PH-Wert.

Auf diese Weise wird die besagte Erde, hier als Kulturerde benannt, so optimiert, dass spätere Düngegaben auf den Feldern und Äckern reduziert werden können.

In weiterer vorteilhafter Ausgestaltung ist angegeben, dass die Erden oder das Kultursubstrat mit mindestens einem weiteren Zuschlagstoff vermischt wird bzw werden. So kann die resultierende Erdmischung auf die Zielverwendung hin genau designt werden.

In vorteilhafter Ausgestaltung ist ein Zuschlagstoff Gesteinsmehl, welches in einem Mengenverhältnis von 0,5 bis 0,8 Gewichtsprozent von der Erden- oder Substratmischung hinzugefügt wird. Gesteinsmehl wirkt einerseits der Bodensäuerung durch bspw sauren Regen entgegen. Ferner bietet es einen Trägerstoff für Bodenmikroben.

Auch die mineralische Versorgung der Erde, d.h. des Bodens ist damit gebeben.

Ein weiterer vorteilhafter Zuschlagstoff ist Kohle, oder Holzkohle oder Biokohle, der mit ca 0,1 bis 5,0 Gewichtsprozent von der Erden- oder Substratmischung hinzugefügt wird.

Weiterhin vorteilhaft ist die Zugabe einer Tonmineralmischung oder aufgeschäumtes Vulkangestein, welches in einem Mengenverhältnis von 0,5 bis 0,8 Gewichtsprozent von der Erden- oder Substratmischung derselben hinzugefügt wird.

Weiterhin vorteilhaft ist, wenn in gewünschter Menge Spurenelemente zugegeben werden.

Eine weitere vorteilhafte Ausgestaltung ist, dass aquatische Pflanzen in einer Menge von 0,5 bis 10% Gewichtsprozent von der Erden- oder Substratmischung derselben hinzugefügt werden.

Weiterhin vorteilhaft ist, wenn Resterdsubstrate aus der Champignonzucht mit zugemischt werden.

Weiterhin vorteilhaft wirkt sich auf die Qualität der Erde aus, wenn der Erdmischung Rhizinusschrot, und/oder Hornspäne, und/oder Hornmehl, und/oder Blutmehl, und/oder Weichholzspäne, und/oder Baumwollabfälle, und/oder Flachsabfälle, und/oder Textilabfälle, und/oder Kokosfasern und/oder Lauberde und/oder Rindenmulch und/oder Holzfasern und/oder Reis- oder Getreidespelzen zugemischt wird.

In Bezug auf eine Pflanz-, oder Blumen-, oder Kompost-, oder Spezialerde, besteht der Kern der Erfindung darin, dass als Basiserdsubstrat Tertiärerde oder Abraumerde aus dem Kohleabbau verwendet wird, und dass landwirtschaftliche Gülle oder Gärreste in einer mechanischen Separation in Dickphase und Dünnphase getrennt, und die so separierte Dickphase der Gülle oder der Gärreste sodann der besagten Tertiär- oder Abraumerde zugemischt wird.

In weiterer vorteilhafter Ausgestaltung ist angegeben, dass die Erden oder das Kultursubstrat mit mindestens einem weiteren Zuschlagstoff vermischt ist, nämlich Gesteinsmehl und/oder Kohle, und/oder Holzkohle, und/oder Biokohle, und/oder Tonminerale, und/oder aufgeschäumtes Vulkangestein, und/oder Spurenelemente, und/oder aquatische Pflanzen, und/oder Resterdsubstrate aus der Championzucht, und/oder Rhizinusschrot, und/oder Hornspäne, und/oder Hornmehl, und/oder Blutmehl, und/oder Weichholzspäne, und/oder Baumwollabfälle, und/oder Flachsabfälle, und/oder Textilabfälle, und/oder Kokosfasern und/oder Lauberde und/oder Rindenmulch und/oder Holzfasern und/oder Reis- oder Getreidespelzen. Jedes dieser Stoffe hat eine bodenverbessernde Eigenschaft einzeln oder in Mischung mit den anderen genannten Stoffen.

Weiterhin ist vorteilhaft, dass die Mischung einen resultierenden PH-Wert von PH 5,5 bis PH 7,0 aufweist, wozu sich dann ein realtives weites Anwendungsfeld ergibt.

Für die Anwendung als Spezialerden für die Verwendung für beispielsweise sogenannte Moorbeetpflanzen ist die vorteilhafte Mischung bei einem PH-Wert von PH 3,5 bis PH 5,5 erzielt.

In einem Ausführungsbeispiel wird die rein mechanisch abseparierte Dickphase aus der landwirtschaftlichen Gülle oder Gärresten durch bspw einen sogenannten Pressschneckenseparator erhalten.

Die Rohgülle oder die Gärreste werden dort eingefüllt, und es findet eine mechanische Trennung in eine Dickphase und eine Dünnphase statt.

Die Dickphase wird sodann mit der oben genannten Basiserde vermischt.

Als Basiserden können dabei dienen:
- Tertiärerde
- Abraumerde aus dem Bergbau,
- Erden die bei der Beerntung von Feldfrüchten anfallen,
- Bleicherden,
- Baggererden aus Flüssen,
- Flugsand

Tertiärerde ist eine Art Abraumerde und enthält viel natürliche Holzkohlestücke.

Abraumerden aller Art aus dem Bergbau können hier verwendet werden, sofern keine Substanzen in toxischer Konzentration enthalten sind.

Eine Erde, die bei der Beerntung von Feldfrüchten anfällt, ist zum Beispiel Rübenerde. Die stellt wegen ihrer Menge ein großes Problem dar.

Bleicherden fallen bei der Pflanzenölherstellung an. Baggererden fallen im großen Umfang bei großen Aushebungen und Flussausbaggerungen an. Dies alles sind Quellen für das erfindungsgemäße Herstellverfahren für die benannten Erden.

Diese dienen zunächst als Grundlage mit einem Anfangswert im sauren PH-Wertbereich.

Diese wird sodann mit der abseparierten Dickphase der Gülle oder Gärreste vermischt, in dem Sinne, wie oben bereits beschrieben, bis sich ein PH Wert in den oben bereits ausgeführten Wertebereichen ergibt. Abschließend ist es auch möglich im Boden sich nachträglich auflösende hygroskopische Polymere einzusetzen.

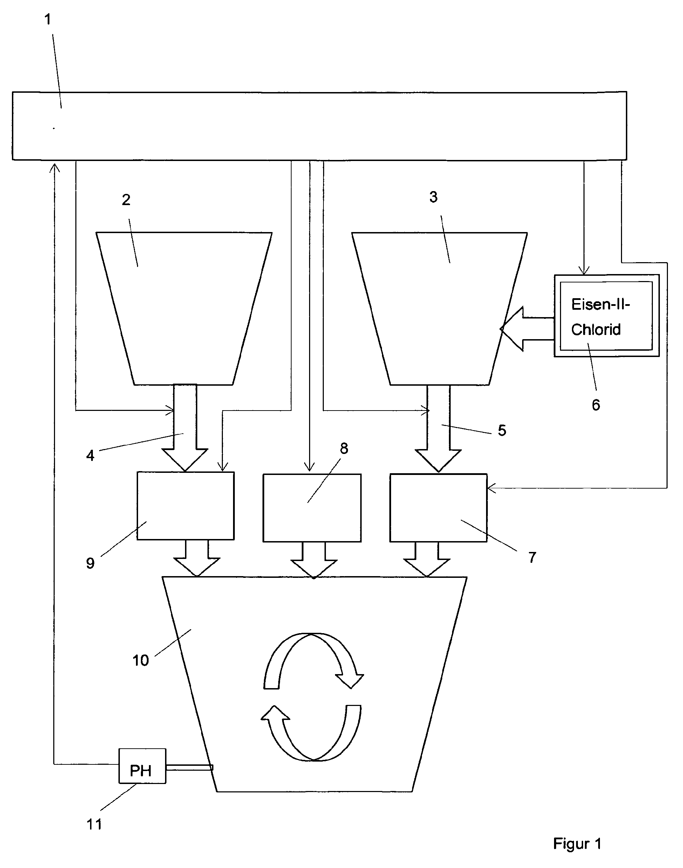

Figur 1 zeigt nochmals die oben bereits beschriebenen Maßnahmen in einer kurzen Übersichtsdarstellung. Ausgehend von einer Steuerung 1, werden Silobehälter angesteuert. In einem Silobehälter befindet sich das oben beschriebene Basiserdsubstrat 2, und in einem anderen Silobehälter befindet sich die abseparierte, oben beschriebene Dickphase 3. Die Ausläufe 4 und 5 der Silos werden über die Steuerung 1 und nachfolgende Mengenregler 7 und 9 mengenmäßig, bzw. im Volumendurchsatz gesteuert. Alle Komponenten fließen in einem Mischer 10 zusammen. Innerhalb des Mischers wird über einen PH-Sensor 11 der PH-Wert der Erdmischung gemessen und als Sensorwert der Steuerung gemeldet, und mit dem gewünschten, zuvor an der Steuerung 1 eingestellten PH-Wert verglichen. Über die Zuführung 8 erfolgt noch die Zugabe von oben genannten Zuschlagstoffen. Ebenso wird über eine Geruchshemmerzugabe 6, Eisen-II-Chlorid oder andere Geruchshemmer wie Citrate, wie bspw Ammoniumcitrat dem Silo mit der abseparierten Dickphase 3, oder dem Auslauf 5 desselben dosiert zugegeben. Diese Dosierung erfolgt hierbei ebenfalls über die Steuerung.

### Bezugszeichen:

- 1: Steuerung
- 2: Basiserdsubstrat
- 3: Abseparierte Dickphase aus Gülle oder Gärresten
- 4: Füllregler
- 5: Füllregler
- 6: Geruchshemmer-Zugabe
- 7: Mengenregler für Dickphase
- 8: Zuführung Zuschlagstoffe
- 9: Mengenregler Basiserdsubstrat
- 10: Mischer
- 11: PH-Wert - Sensor

## Patentansprüche

1. Verfahren zur Herstellung von Pflanz-, oder Blumen-, oder Kompost-, oder Spezialerden, oder Kultursubstrat, bei welcher zumindest Teile von landwirtschaftlicher Gülle oder Gärresten zu einem Basiserdsubstrat mit zugemischt wird,
**dadurch gekennzeichnet,**
**dass** als Basiserdsubstrat Tertiärerde oder Abraumerde aus dem Bergbau, oder Erden die bei der Beerntung von Feldfrüchten anfallen, oder Bleicherden, oder Baggererden aus Flüssen, oder Flugsand verwendet wird, und dass landwirtschaftliche Gülle oder Gärreste in einer mechanischen Separation in Dickphase und Dünnphase getrennt, und die so abseparierte Dickphase der Gülle oder der Gärreste sodann der besagten Tertiär- oder Abraumerde zugemischt wird.

2. Verfahren nach Anspruch 1,
**dadurch gekennzeichnet,**
**dass** das Mischungsverhältnis von Basiserdsubstrat und abseparierter Dickphase der Gülle oder der Gärreste von ph-wert gesteuert eingestellt wird, indem ausgehend von dem Basiserdsubstrat abseparierte Dickphase von Gülle oder von Gärresten zugeführt wird, bis ein ph-Wert der Mischung von ph 5,5 bis ph 7,0 erreicht wird.

3. Verfahren nach Anspruch 1,
**dadurch gekennzeichnet,**
**dass** das Mischungsverhältnis von Basiserdsubstrat und abseparierter Dickphase der Gülle oder Gärresten über den ph-wert gesteuert eingestellt wird, indem ausgehend von dem Basiserdsubstrat abseparierte Dickphase von Gülle oder Gärresten zugeführt wird, bis ein ph-Wert der Mischung von ph 3,5 bis ph 5,5 erreicht wird.

4. Verfahren nach Anspruch 1, 2 oder 3,
**dadurch gekennzeichnet,**
**dass** die Erden oder das Kultursubstrat mit mindestens einem weiteren Zuschlagstoff vermischt wird bzw werden.

5. Verfahren nach Anspruch 4,
**dadurch gekennzeichnet,**
**dass** ein Zuschlagstoff Gesteinsmehl ist, welches in einem Mengenverhältnis von 0,5 bis 0,8 Gewichtsprozent von der Erden- oder Substratmischung hinzugefügt wird.

6. Verfahren nach Anspruch 4 oder 5,
**dadurch gekennzeichnet,**
**dass** ein Zuschlagstoff Kohle, oder Holzkohle oder Biokohle ist, der mit ca 0,1 bis 4,8 Gewichtsprozent von der Erden- oder Substratmischung hinzugefügt wird.

7. Verfahren nach Anspruch 4, 5 oder 6
**dadurch gekennzeichnet,**
**dass** ein Zuschlagstoff eine Tonmineralmischung oder aufgeschäumtes Vulkangestein ist, welches in einem Mengenverhältnis von 0,5 bis 0,8 Gewichtsprozent von der Erden- oder Substratmischung hinzugefügt wird.

8. Verfahren nach einem der Ansprüche 4 bis 7,
**dadurch gekennzeichnet,**
**dass** in gewünschter Menge Spurenelemente zugegeben werden.

9. Verfahren nach einem der Ansprüche 4 bis 8,
**dadurch gekennzeichnet,**
**dass** aquatische Pflanzen in einer Menge von 0,5 bis 10% Gewichtsprozent von der Erden- oder Substratmischung hinzugefügt wird.

10. Verfahren nach einem der Ansprüche 4 bis 9,
**dadurch gekennzeichnet,**
**dass** Resterdsubstrate aus der Champignonzucht mit zugemischt werden.

11. Verfahren nach einem der Ansprüche 4 bis 10,
**dadurch gekennzeichnet,**
**dass** der Erdmischung Rhizinusschrot, und/oder Hornspäne, und/oder Hornmehl, und/oder Blutmehl, und/oder Weichholzspäne, und/oder Baumwollabfälle, und/oder Flachsabfälle, und/oder Textilabfälle, und/oder Kokosfasern und/oder Lauberde und/oder Rindenmulch und/oder Holzfasern und/oder Reis- oder Getreidespelzen zugemischt wird.

12. Pflanz-, oder Blumen-, oder Kompost-, oder Spezialerde, bei welcher zumindest Teile von landwirtschaftlicher Gülle oder Gärreste zu einem Basiserdsubstrat mit zugemischt wird,
**dadurch gekennzeichnet,**
**dass** als Basiserdsubstrat Tertiärerde oder Abraumerde aus dem Kohleabbau verwendet wird, und dass landwirtschaftliche Gülle oder Gärreste in einer mechanischen Separation in Dickphase und Dünnphase getrennt, und die so separierte Dickphase der Gülle oder der Gärreste sodann der besagten Tertiär oder Abraumerde zugemischt wird.

13. Pflanz-, oder Blumen-, oder Kompost-, oder Spezialerde nach Anspruch 12,
**dadurch gekennzeichnet, dass** die Erden oder das Kultursubstrat mit mindestens einem weiteren Zuschlagstoff vermischt ist, nämlich Gesteinsmehl und/oder Kohle, und/oder Holzkohle, und/oder Biokohle, und/oder Tonminerale, und/oder aufgeschäumtes Vulkangestein, und/oder Spurenelemente, und/oder aquatische Pflanzen, und/oder Resterdsubstrate aus der Champignonzucht, und/oder Rhizinusschrot, und/oder Hornspäne, und/oder Hornmehl, und/oder Blutmehl, und/oder Weichholzspäne, und/oder Baumwollabfälle, und/oder Flachsabfälle, und/oder Textilabfälle, und/oder Kokosfasern und/oder Lauberde und/oder Rindenmulch und/oder Holzfasern und/oder Reis- oder Getreidespelzen.

14. Pflanz-, oder Blumen-, oder Kompost-, oder Spezialerde nach Anspruch 12 oder 13,
**dadurch gekennzeichnet,**
**dass** die Mischung einen resultierenden PH-Wert von PH 5,5 bis PH 7,0 aufweist.

15. Spezialerde nach Anspruch 12 oder 13,
**dadurch gekennzeichnet,**
**dass** für die Verwendung für beispielsweise sogenannte Moorbeetpflanzen die Mischung einen PH-Wert von PH 3,5 bis PH 5,5 aufweist.
